# EUROPÄISCHE PATENTSCHRIFT

(11) **EP 2 017 583 B1**
(45) Veröffentlichungstag und Bekanntmachung des Hinweises auf die Patenterteilung: **07.03.2012**
(21) Anmeldenummer: 08007483.4
(22) Anmeldetag: 17.04.2008
(51) Int. Cl.: G01D 5/14

(54) **Längenmesseinrichtung**
Length measuring device
Dispositif de mesure de longueur

(30) Priorität: 19.07.2007 DE 102007033574
(43) Veröffentlichungstag der Anmeldung: 21.01.2009
(73) Patentinhaber: Dr. Johannes Heidenhain GmbH, 83301 Traunreut (DE)
(72) Erfinder: Peterlechner, Andreas, 5121 St. Radegund (AT)

(56) Entgegenhaltungen:
- EP-A- 1 211 476
- DE-A1- 2 929 488
- JP-A- 62 248 368

## Beschreibung

Die Erfindung betrifft eine Längenmesseinrichtung nach dem Oberbegriff des Anspruchs 1.

Derartige Längenmesseinrichtungen, wie sie beispielsweise in der DE 28 10 341 C2 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Dabei wird als Maßverkörperung ein Maßstab mit einer Messteilung verwendet, der vor Umwelteinflüssen geschützt in einem in Messrichtung längserstreckten Gehäuse untergebracht ist. Zur einfachen und kostengünstigen Herstellung ist das Gehäuse ein Strangpressprofil aus nichtmagnetischem Material, insbesondere Aluminium. Die Messteilung, die inkremental oder absolut codiert ist, wird bei der Positionsmessung von einem Abtastwagen abgetastet. Hierzu wird der Abtastwagen an zwei senkrecht zueinander verlaufenden Führungsflächen des Maßstabs in Messrichtung längsgeführt und an diese angedrückt. Diese Führung hat sich bewährt, da gewährleistet ist, dass über die gesamte Messlänge ein konstanter Abtastabstand zwischen dem Abtastwagen -insbesondere der Abtastplatte- und dem Maßstab eingehalten wird, was eine gute Qualität der Abtastsignale garantiert. Die Führung des Abtastwagens ist von der Führung des zu messenden Objektes entkoppelt, indem zwischen dem zu messenden Objekt und dem Abtastwagen ein Mitnehmer mit einer Kupplung vorgesehen ist, welche den Abtastwagen in Messrichtung steif und quer dazu nachgiebig an den Mitnehmer ankoppelt. Das Andrücken des Abtastwagens, also das Erzeugen der Andruckkraft an die beiden zueinander senkrechten Führungsflächen des Maßstabs, erfolgt beim Stand der Technik durch einen Federarm (DE 23 49 944 A1) oder durch mehrere Anpressfedern, wobei für jede der Führungsflächen eine eigene Feder vorgesehen ist (DE 28 10 341 C2), deren Andruckkraft auf die jeweilige Führungsfläche gerichtet ist. Diese senkrecht zueinander ausgerichteten Federn sind in der Regel zwischen dem Abtastwagen und dem Mitnehmer angeordnet, dies führt dazu, dass der Abstand zwischen dem Abtastwagen und dem Mitnehmer Einfluss auf die Andruckkräfte hat. Die Anbautoleranzen müssen daher besonders klein gewählt werden.

In der DE 29 29 488 A1 und der JP 62 248368 A sind Längenmesseinrichtungen offenbart, bei denen ein Abtastwagen mittels Magnetkraft an einen Maßstab gedrängt wird. Bei der DE 29 29 488 A1 ist hierzu auf den Maßstab eine Führungsleiste aufgebracht, welche mit Magnete des Abtastwagens zusammenwirken.

Die Anforderungen an Längenmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau vorhanden sein und die Längenmesseinrichtung soll kostengünstig herstellbar sein.

Der Erfindung liegt die Aufgabe zugrunde, eine Längenmesseinrichtung mit hoher Messgenauigkeit zu schaffen, die kostengünstig herstellbar ist.

Diese Aufgabe wird erfindungsgemäß durch die Merkmale des Anspruchs 1 gelöst.

Diese Anforderungen erfordern eine gekapselte Längenmesseinrichtung mit geschützt untergebrachtem Maßstab. Eine hohe Auflösung bedingt einen immer geringeren und über die gesamte Messlänge konstanten Abtastabstand. Dies wird durch Führung des Abtastwagens am Maßstab erreicht, wobei zur ungestörten präzisen Führung des Abtastwagens dieser am Mitnehmer über eine nur in Messrichtung steife Kupplung an den Abtastwagen angekoppelt ist. Diese Kupplung ermöglicht in allen anderen Richtungen eine Bewegung des Mitnehmers ohne Rückwirkung auf die präzise Führung und Bewegung des Abtastwagens in Messrichtung. Der Abtastwagen ist zur präzisen Geradführung an zwei senkrecht zueinander verlaufenden Führungsflächen des Maßstabs geführt und wird an diese angedrückt, wobei die Andruckkraft durch Magnetkraft zwischen zumindest einem ersten Element des Abtastwagens und einem am nichtmagnetischen Gehäuse vorgesehenen zweiten Element bewirkt wird.

Mit der Erfindung wird ein kompakter Aufbau einer Längenmesseinrichtung ermöglicht, wobei auch eine hohe Messgenauigkeit und eine reproduzierbare Positionsmessung erreichbar ist.

Bei der gemäß der Erfindung ausgeführten Längenmesseinrichtung ist die Andruckkraft, mit der der Abtastwagen an den Maßstab gedrängt wird unabhängig vom Anbau. Der Abstand zwischen dem Abtastwagen und dem Mitnehmer beeinflusst die Andruckkraft nämlich nicht.

Die Führung des Abtastwagens am Maßstab garantiert eine exakte Parallelführung zur Messteilung, da die Oberflächen des Maßstabs definiert zum Verlauf der Messteilung ausgerichtet sind.

In den abhängigen Ansprüchen sind vorteilhafte Ausgestaltungen der Erfindung angegeben.

Die Erfindung wird mit Hilfe eines Ausführungsbeispiels näher erläutert.

Dabei zeigt
- Figur 1: einen Teilschnitt einer Längenmesseinrichtung quer zur Messrichtung und

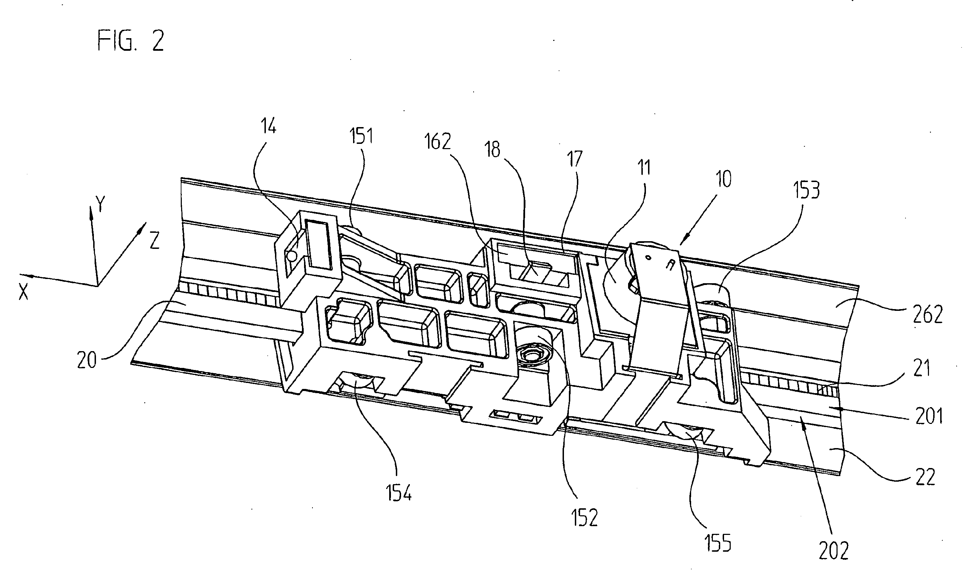

- Figur 2: eine perspektivische Ansicht des Abtastwagens mit einem Teil des Gehäuses der Längenmess- einrichtung gemäß Figur 1.

Die Erfindung ist am Beispiel einer optischen Längenmesseinrichtung dargestellt, mit der die Relativlage zweier in Messrichtung X gegeneinander verschiebbarer Objekte 1 und 2 gemessen werden soll. Dabei wird ein transparenter Maßstab 20, insbesondere aus Glas, von einem relativ zum Maßstab 20 in Messrichtung X bewegbaren Abtastwagen 10 abgetastet. Der Maßstab 20 weist eine Messteilung 21 auf, die von dem Abtastwagen 10 im Durchlicht abgetastet wird. Dazu umfasst der Abtastwagen 10 eine Beleuchtungseinheit 11, die ein Lichtbündel aussendet, welches durch den Maßstab 20 verläuft und schließlich auf lichtempfindliche Abtastsensoren 12 des Abtastwagens 10 trifft. Das Lichtbündel wird dabei von der Messteilung 21 am Maßstab 20 positionsabhängig moduliert.

Der Maßstab 20 ist innerhalb eines Gehäuses 22 angeordnet, welches wiederum an dem zu messenden Objekt 2, beispielsweise einem Maschinenbett einer Werkzeugmaschine befestigt ist. Der Maßstab 20 ist dabei in bekannter Weise mit dem Gehäuse 22 verbunden, beispielsweise durch Kleben oder Klemmen. Das Gehäuse 22 weist in seiner Längsrichtung in Messrichtung X verlaufend einen Schlitz auf, der durch dachförmig geneigte Dichtlippen verschlossen ist, durch die ein Mitnehmer 13 mit einem schwertförmigen Mittelstück hindurchgreift. Der Mitnehmer 13 weist einen Montagebereich 131 auf, mit dem er an dem relativ zum Maschinenbett 2 verschiebbaren Objekt 1, beispielsweise einem Schlitten der Werkzeugmaschine befestigbar ist.

Zwischen dem Abtastwagen 10 und dem Mitnehmer 13 ist eine Kupplung 14 angeordnet, die den Abtastwagen 10 in Messrichtung X steif und quer dazu nachgiebig an den Mitnehmer 13 ankoppelt. Durch diese Maßnahme werden Fehlausrichtungen des Mitnehmers 13 nicht auf den Abtastwagen 10 übertragen. Die Kupplung 14 ist nur schematisch dargestellt. Sie ist in an sich bekannter Weise beispielsweise gemäß der EP 0 733 882 B1 als Kugelkupplung ausgebildet, bei der eine Kugel aus ferromagnetischen Material über Magnetkraft zwischen einer senkrecht zur Messrichtung verlaufenden Fläche des Mitnehmers 13 und einer senkrecht zur Messrichtung verlaufenden Fläche des Abtastwagens 10 mittels Magnetkraft eingespannt und gehalten ist.

Der Abtastwagen 10 ist zur exakten Parallelführung längs des Maßstabs 20 an diesem geführt. Der Abtastwagen 10 stützt sich dazu über Führungselemente 151 bis 155 an zwei senkrecht zueinander ausgerichteten Flächen 201, 202 des Maßstabs 20 ab. Eine dieser Flächen ist die die Messteilung 21 tragende Oberfläche 201 und die andere eine senkrecht dazu verlaufende Schmalseite 202 des Maßstabs 20. Die Führungselemente können Gleitelemente sein, aber insbesondere kugelgelagerte Walzen bzw. Rollen 151 bis 155.

Der Abtastwagen 10 wird durch das Zusammenwirken von magnetischen Elementen 161 und 261 sowie 162 und 262 an die Flächen 201, 202 des Maßstabs 20 gedrängt. Diese Andruckkraft wird durch eine Magnetkraft zwischen zumindest einem ersten Element 161, 162 des Abtastwagens 10 und zumindest einem am Gehäuse 22 vorgesehenen zweiten Element 261, 262 bewirkt. Der Begriff magnetisches Material definiert ein Material, das ferromagnetisch ist oder permanentmagnetisch ist. Insbesondere ist das erste Element ein Permanentmagnet 161, 162 und das zweite Element 261, 262 ein am Gehäuse 22 angebrachtes Element aus ferromagnetischem Material. Die Permanentmagnete 161, 162 sind insbesondere aus NdFeB.

Das Gehäuse 22 ist aus nichtmagnetischem Material hergestellt, insbesondere ist es ein Strangpressprofil aus Aluminium. Dies hat den Vorteil, dass an das Profil 22 diverse Funktionselemente, z. B. zum Anbau an das zu messende Objekt 2, Auflagen bzw. Aufnahmen für den Maßstab 20 sowie Aufnahmen für die Dichtlippen ohne Mehraufwand angeformt werden können. Diese Möglichkeit wird bei der Erfindung genutzt, indem in das Gehäuse 22 Nuten 231, 232 zum Einziehen von Bändern 261, 262 angeformt sind. Die Bänder 261, 262 sind aus ferritischem Stahl.

Der Abtastwagen 10 stützt sich mit den Führungselementen, insbesondere mehreren kugelgelagerten Rollen 151, 152, 153 auf der Fläche 201 ab. Die Andruckkraft Fz des Abtastwagens 10 an diese Fläche 201 ist senkrecht zu dieser Fläche 201 ausgerichtet und wird durch das Zusammenwirken des im Abtastwagen 10 fixierten Magneten 161 und des in die Nut 231 eingeschobenen Stahlbandes 261 generiert. Das Stahlband 261 verläuft parallel zu der Fläche 201 in Messrichtung X und steht dem Magneten 161 gegenüber, und zwar in einem Abstand von etwa 0,8 mm. Die Andruckkraft Fz beträgt etwa 2,3 N.

Senkrecht dazu stützt sich der Abtastwagen 10 mit den Führungselementen, insbesondere mit mehreren kugelgelagerten Rollen 154 und 155 auf der Fläche 202 ab. Die Andruckkraft Fy des Abtastwagens 10 an diese Fläche 202 ist senkrecht zu dieser Fläche 202 ausgerichtet und wird durch das Zusammenwirken des im Abtastwagen 10 fixierten Magneten 162 und des in die Nut 232 eingeschobenen Stahlbandes 262 generiert. Das Stahlband 262 verläuft parallel zu der Fläche 202 in Messrichtung X und steht dem Magneten 162 gegenüber, und zwar in einem Abstand von etwa 0,8 mm. Die Andruckkraft Fy beträgt etwa 1,8 N.

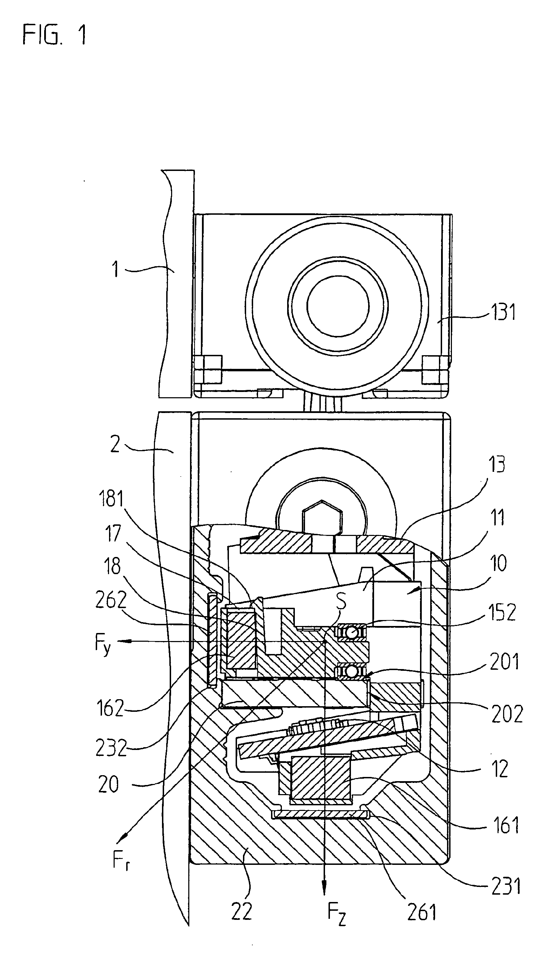

Die beiden Rollen 154 und 155 sind symmetrisch zum Magnet 162 angeordnet und die beiden Rollen 151 und 153 sind symmetrisch zum Magnet 161 angeordnet, wobei die Rolle 152 an der X-Position des Magneten 161 angeordnet ist, was der in Figur 1 dargestellten Schnittposition entspricht. Die räumliche Anordnung der Rollen 151 bis 155 und die durch Magnetkraft generierten Andruckkräfte Fy und Fz sind derart ausgelegt, dass die an den einzelnen Rollen 151 und 155 auftretenden Kräfte zumindest annähernd gleich sind, im Beispiel etwa 0,8 N. Die durch Magnetkraft generierten Andruckkräfte Fy, Fz sind weiterhin derart gerichtet und dimensioniert, dass die daraus resultierende Kraft Fr zumindest annähernd durch den Schwerpunkt S des Abtastwagens 10 verläuft.

Die Größe und Stärke der Magnete 161, 162 sowie der Abstand zu dem korrespondierenden Stahlband 261, 262 ist derart gewählt, dass sich bei einer Abstandsänderung die Magnetkraft möglichst wenig ändert. Der Abstand wird also in einen möglichst flachen Bereich der Magnetkraft-Abstands-Kennlinie gelegt.

Die Halterung der Magnete 161, 162 erfolgt besonders vorteilhaft in einer taschenförmigen Aufnahme 17 des Abtastwagens 10. Wie in der Schnittdarstellung Figur 1 am Beispiel des Magneten 162 dargestellt ist, ist die Aufnahme 17 derart ausgebildet, dass der Magnet 162 in die Aufnahme 17 einschiebbar ist und der Magnet 162 einrastet. Im eingeschobenen Zustand wird der Magnet 162 von einem Vorsprung 181 einer federnden Zunge 18 gehalten. Der Magnet 162 rastet also in die Aufnahme 17 ein.

Bei dem ausführlich erläuterten Beispiel ist das erste Element des Abtastwagens 10 zumindest ein Permanentmagnet 161, 162, und zwar für die Andruckkraft Fx der Permanentmagnet 161 und für die Andruckkraft Fy der Permanentmagnet 162. Das zweite Element sind die zwei in Nuten 231, 232 eingezogenen Stahlbänder 261 und 262. Alternativ dazu können die Stahlbänder 261, 262 auch an den Innenseiten des Gehäuses 22 aufgeklebt werden. Eine weitere Abwandlung wäre die Stahlbänder 261, 262 durch Magnetbänder zu ersetzen, also durch bandförmige Permanentmagnete, die in Nuten des Gehäuses eingezogen sind oder am Gehäuse angeklebt sind und mit Permanentmagneten bzw. mit ferromagnetischen Elementen des Abtastwagens die erforderliche Andruckkraft erzeugen.

Die Erfindung ist nicht auf das optische Abtastprinzip beschränkt. Die Abtastung des Maßstabs kann auch kapazitiv, magnetisch oder induktiv sein, wozu die Messteilung und die Abtastsensoren entsprechend auszubilden sind.

## Patentansprüche

1. Längenmesseinrichtung zur Messung der Relativposition zweier Objekte (1, 2), mit
- einem in Messrichtung X längserstreckten Gehäuse (22) aus nichtmagnetischem Material;
- einem Maßstab (20) in dem Gehäuse (22);
- einem Abtastwagen (10) zur Abtastung einer Messteilung (21) des Maßstabs (20), wobei der Abtastwagen (10) in Messrichtung X steif und quer dazu nachgiebig an einen Mitnehmer (13) angekoppelt ist, der an einem der beiden Objekte (1) befestigbar ist, und wobei der Abtastwagen (10) an zwei senkrecht zueinander verlaufenden Führungsflächen (201, 202) des Maßstabs (20) in Messrichtung X längsgeführt ist und an diese angedrückt wird, **dadurch gekennzeichnet, dass**
- die Andruckkraft (Fz Fy) durch Magnetkraft zwischen zumindest einem ersten Element (161, 162) des Abtastwagens (10) und einem am nichtmagnetischen Gehäuse (22) vorgesehenen zweiten Element (261, 262) bewirkt wird.

2. Längenmesseinrichtung nach Anspruch 1, **dadurch gekennzeichnet, dass** das zweite Element zumindest ein Band (261, 262) aus magnetischem Material ist.

3. Längenmesseinrichtung nach Anspruch 2, **dadurch gekennzeichnet, dass** am Gehäuse (22) zumindest eine Nut (231, 232) eingebracht ist, in die das Band (261, 262) eingeschoben ist.

4. Längenmesseinrichtung nach Anspruch 3, **dadurch gekennzeichnet, dass** das Gehäuse (22) ein Strangpressprofil aus Aluminium ist, in das die zumindest eine Nut (231, 232) eingeformt ist.

5. Längenmesseinrichtung nach einem der Ansprüche 2 bis 4, **dadurch gekennzeichnet, dass** jeweils ein Band (261, 262) parallel zu einer der beiden Führungsflächen (201, 202) verläuft.

6. Längenmesseinrichtung nach einem der Ansprüche 2 bis 5, **dadurch gekennzeichnet, dass** das Band jeweils ein Stahlband (261, 262) ist.

7. Längenmesseinrichtung nach einem der vorhergehenden Ansprüche, **dadurch gekennzeichnet, dass** der Abtastwagen (10) über mehrere Führungselemente (151 bis 155) an jeder der Führungsflächen (201, 202) des Maßstabs (20) geführt ist.

8. Längenmesseinrichtung nach Anspruch 7, **dadurch gekennzeichnet, dass** die Magnetkraft derart gewählt ist, dass auf jedes der Führungselemente (151 bis 155) zumindest etwa die gleiche Andruckkraft ausgeübt wird.

9. Längenmesseinrichtung nach einem der vorhergehenden Ansprüche, **dadurch gekennzeichnet, dass** das zumindest eine erste Element ein Permanentmagnet (161. 162) ist.

10. Längenmesseinrichtung nach Anspruch 9, **dadurch gekennzeichnet, dass** in dem Abtastwagen (10) eine Aufnahme (17) für den Permanentmagneten (161, 162) vorgesehen ist, in die er einschiebbar und einrastbar ist.

11. Längenmesseinrichtung nach Anspruch 10, **dadurch gekennzeichnet, dass** die Aufnahme (17) zum Einrasten des Permanentmagneten (161, 162) eine federnde Zunge (18) mit einem Vorsprung (181) aufweist.

12. Längenmesseinrichtung .nach einem der vorhergehenden Ansprüche Anspruch 9 bis 11, **dadurch gekennzeichnet, dass** ein erstes Stahlband (261) parallel zur ersten Führungsfläche (201) des Maßstabs (20) in einer Nut (231) des Gehäuses (20) eingeschoben ist und dass dieses Stahlband (261) einem ersten Permanentmagnet (161) der Abtasteinheit (10) gegenübersteht und eine Magnetkraft (Fz) in Form einer Andruckkraft des Abtastwagens (10) senkrecht auf die erste Führungsfläche (201) generiert, und dass ein zweites Stahlband (262) parallel zur zweiten Führungsfläche (202) des Maßstabs (20) in einer Nut (232) des Gehäuses (20) eingeschoben ist und dass dieses Stahlband (262) einem zweiten Permanentmagnet (162) der Abtasteinheit (10) gegenübersteht und eine Magnetkraft (Fy) in Form einer Andruckkraft des Abtastwagens (10) senkrecht auf die zweite Führungsfläche ( 202) generiert.

## Claims

1. A length measuring device for measuring the relative position of two objects (1, 2), comprising
- a housing (22) consisting of non-magnetic material, which is longitudinally extended in measuring direction X;
- a scale (20) in the housing (22);
- a scanning carriage (10) for scanning a measuring graduation (21) of the scale (20), wherein the scanning carriage (10) is coupled to an actuator (13) in a stiff manner in measuring direction X and in a flexible manner at right angles thereto, said actuator (13) being capable of being attached to one of the two objects (1), and wherein the scanning carriage (10) is longitudinally guided in measuring direction X on two guide surfaces (201, 202) of the scale (20), which run vertically to one another and is pressed against them, **characterized in that**
- the pressing force (Fz, Fy) is effected by means of magnetic force between at least a first element (161, 162) of the scanning carriage (10) and a second element (261, 262), which is provided on the non-magnetic housing (22).

2. The length measuring device according to claim 1, **characterized in that** the second element is at least one strip (261, 262) made of a magnetic material.

3. The length measuring device according to claim 2, **characterized in that** at least one groove (231, 232), into which the strip (261, 262) is inserted, is positioned on the housing (22).

4. The length measuring device according to claim 3, **characterized in that** the housing (22) is a extruded sheath made of aluminum, into which the at least one groove (231, 232) is molded.

5. The length measuring device according to one of claims 2 to 4, **characterized in that** a strip (261, 262) in each case runs parallel to one of the two guide surfaces (201, 202).

6. The length measuring device according to one of claims 2 to 5, **characterized in that** the strip is a steel strip (261, 262) in each case.

7. The length measuring device according to one of the preceding claims, **characterized in that** the scanning carriage (10) is guided via a plurality of guide elements (151 to 155) on each of the guide surfaces (201, 202) of the scale (20).

8. The length measuring device according to claim 7, **characterized in that** the magnetic force is chosen such that at least approximately the same pressing force is exerted onto each of the guide elements (151 to 155).

9. The length measuring device according to one of the preceding claims, **characterized in that** the at least one first element is a permanent magnet (161, 162).

10. The length measuring device according to claim 9, **characterized in that** an accommodation (17) for the permanent magnet (161, 162), into which it can be inserted and with which it can be locked in place, is provided in the scanning carriage (10).

11. The length measuring device according to claim 10, **characterized in that** the accommodation (17) encompasses an elastic tongue (18) comprising a projection (181) for locking the permanent magnet (161, 162) in place.

12. The length measuring device according to one of the preceding claims 9 to 11, **characterized in that** a first steel strip (261) is inserted in a groove (231) of the housing (20) parallel to the first guide surface (201) of the scale (20) and **in that** this steel strip (261) faces a first permanent magnet (161) of the scanning unit (10) and generates a magnetic force (Fz) in the form of a pressing force of the scanning carriage (10) vertically onto the first guide surface (201), and **in that** a second steel strip (262) is inserted in a groove (232) of the housing (20) parallel to the second guide surface (202) of the scale (20), and **in that** this steel strip (262) faces a second permanent magnet (162) of the scanning unit (10) and generates a magnetic force (Fy) in the form of a pressing force of the scanning carriage (10) vertically onto the second guide surface (202).

## Revendications

1. Dispositif de mesure de longueur pour la mesure de la position relative de deux objets (1, 2), avec
- un boîtier (22) s'étendant longitudinalement dans une direction de mesure X, constitué d'un matériau non magnétique ;
- une échelle graduée (20) dans le boîtier (22) ;
- un chariot de balayage (10) pour le balayage d'une graduation (21) de l'échelle graduée (20), où le chariot de balayage (10) est accouplé de façon rigide dans la direction de mesure X et de façon souple dans une direction transversale à un entraîneur (13) apte à être fixé à l'un des deux objets (1), et où le chariot de balayage (10) est guidé longitudinalement dans la direction de mesure X, sur deux surfaces de guidage (201, 202) de l'échelle graduée (20), qui s'étendent perpendiculairement l'un par rapport à l'autre, tout en étant serré contre celles-ci, **caractérisé en ce que**
- une force de serrage (F, Fy) est exercée par une force magnétique entre au moins un premier élément (161, 162) du chariot de balayage (10) et un deuxième élément (261, 262) prévu sur le boîtier non magnétique (22).

2. Dispositif de mesure de longueur selon la revendication 1, **caractérisé en ce que** le deuxième élément est au moins une bande (261, 262) constituée d'un matériau magnétique.

3. Dispositif de mesure de longueur selon la revendication 2, **caractérisé en ce qu'**au moins une rainure (231, 232) est intégrée sur le boîtier (22), dans laquelle est insérée la bande (261, 262).

4. Dispositif de mesure de longueur selon la revendication 3, **caractérisé en ce que** le boîtier (22) est un profilé extrudé, dans lequel est formé l'au moins une rainure (231, 232).

5. Dispositif de mesure de longueur selon l'une des revendications 2 à 4, **caractérisé en ce que** chacune des bandes (261, 262) s'étend parallèlement à l'une des deux surfaces de guidage (201, 202).

6. Dispositif de mesure de longueur selon l'une des revendications 2 à 5, **caractérisé en ce que** chacune des bandes est une bande d'acier (261, 262).

7. Dispositif de mesure de longueur selon l'une des revendications précédentes, **caractérisé en ce que** le chariot de balayage (10) est guidé par plusieurs éléments de guidage (151, 155) sur chacune des surfaces de guidage (201, 202) de l'échelle graduée (20).

8. Dispositif de mesure de longueur selon la revendication 7, **caractérisé en ce que** la force magnétique est choisie de manière à ce qu'au moins une force de serrage à peu près égale soit exercée sur chacun des éléments de guidage (151 à 155).

9. Dispositif de mesure de longueur selon l'une des revendications précédentes, **caractérisé en ce qu'**au moins un premier élément est un aimant permanent (161, 162).

10. Dispositif de mesure de longueur selon la revendication 9, **caractérisé en ce qu'**une admission (17) destinée à l'aimant permanent (161, 162) est prévue dans le chariot de balayage (10), dans laquelle il peut être inséré et enclenché.

11. Dispositif de mesure de longueur selon la revendication 10, **caractérisé en ce que** l'admission (17) destinée à l'enclenchement de l'aimant permanent (161, 162) comporte une langue élastique (18) avec une saillie (181).

12. Dispositif de mesure de longueur selon l'une des revendications précédentes 9 à 11, **caractérisé en ce qu'**une première bande d'acier (261) est insérée dans une rainure (231) du boîtier (20) parallèlement à la première surface de guidage (201) de l'échelle graduée (20), et **en ce que** cette bande d'acier (261) se trouve en face d'un premier aimant permanent (161) de l'unité de balayage (10) et génère une force magnétique (Fz) verticalement sur la première surface de guidage (201), sous la forme d'une force de serrage du chariot de balayage (10), et **en ce qu'**une deuxième bande d'acier (262) est insérée dans une rainure (232) du boîtier (20), parallèlement à la deuxième surface de guidage (202) de l'échelle graduée (20), et **en ce que** cette bande d'acier (262) se trouve en face d'un deuxième aimant permanent (162) de l'unité de balayage (10) et génère une force magnétique (Fy) verticalement sur la deuxième surface de guidage (202), sous la forme d'une force de serrage du chariot de balayage (10).
